# EUROPEAN PATENT APPLICATION

(11) **EP 4 659 867 A1**
(43) Date of publication of application: **10.12.2025**
(21) Application number: 24382611.2
(22) Date of filing: 05.06.2024
(51) Int. Cl.: B05B 12/12, B05B 13/04, B05D 1/02, B05D 1/26, B05D 1/32, B05D 3/06

(54) **DEVICE FOR MASKING SURFACES**

(71) Applicant: AIRBUS OPERATIONS, S.L.U., 28906 Getafe, Madrid (ES)
(72) Inventor: LOPEZ BRAVO, David, 28906 GETAFE (Madrid) (ES); HERNANDEZ SOTO, Roberto, 28906 GETAFE (Madrid) (ES); BAÑOS MORENO, Samuel, 28906 GETAFE (Madrid) (ES); ROMÓN BANOGON, Carlos, 28906 GETAFE (Madrid) (ES)
(74) Representative: Herrero & Asociados, S.L.

(57) **Abstract**

The device for masking surfaces comprises an applicator (1), that applies a resin on a surface, a resin dispenser (2) that dispenses the resin to the applicator (1); a resin deposit (7) that provides the resin to the resin dispenser (2); and a joint (8) for engaging a robot arm.

The device for masking surfaces permits a fully automated masking industrial process, suitable for any composite or metallic components, and with good performance under an industrial environment.

## Description

The present invention relates to a device for masking surfaces, in particular, for masking surfaces that can be metallic or non-metallic of composite manufacturing tools.

### Background of the invention

Composite manufacturing usually requires the use of metallic and non-metallic tools that are in direct contact with the epoxy resin of the material, which is a really adherent material once cured, and therefore a surface treatment, such of the application of a demoulding agent, has to be done over the tools before the manufacturing process starts.

To ensure that the demoulding agent is applied only in the needed surface, the perimeter is delimited before application. This delimitation, called masking, can be done with different materials, and it is done to prevent demoulding agents from getting into non-desired areas.

Another application where masking is required is the preparation of flying parts, either composite or metallic, prior to primer or paint application. This is to comply with the painting schemes, which required different patterns.

One of the materials that can be used for this masking process are masking resins. These resins are applied in liquid format over the tool surface and then rapidly cured into solid phase to allow compatibility with other processes. Finally, they can be removed from the surface without leaving any waste over it.

However, there is a long list of inconveniences for its use in an industrial environment, such as:
- The resin deposition process is time taking, as the resin deposition is made using a small nozzle;
- The curing process is time taking, as it takes another tool to cure the resin, either a heating tool or an UV tool;
- The resin application area must be localized, as the resin is applied with a nozzle, which makes the deposition process slower.
- Target components suitable for this process must not be large, as a masking robot has limited arm reach.

### Description of the invention

Therefore, an objective of the present invention is to provide a device for masking surfaces that permits a fully automated masking industrial process, suitable for any composite or metallic components, and with good performance under an industrial environment.

The device for masking surfaces of the invention solves the above-mentioned disadvantages and has other advantages which will be described below.

The device for masking surfaces according to the present invention is described in claim 1, and the dependent claims include additional features that are optional.

In particular, the device for masking surfaces comprises:
- a applicator, that sprays a resin on a surface;
- a resin dispenser that dispenses the resin to the applicator;
- a resin deposit that provides the resin to the resin dispenser; and
- a joint for engaging a robot arm.

Furthermore, the device also comprises preferably a curing lamp, e.g., an UV curing lamp.

The device for masking surfaces according to the present invention can also comprise a camera, a first distance sensor oriented to an application side of the device, and a second distance sensor oriented to a curing side of the device.

Preferably, the curing lamp is placed in an opposite side of the device with respect to the applicator.

Furthermore, the applicator is a nozzle or a spray gun, that are interchangeable to each other, and the nozzle can be used for limiting the masking area and the spray gun mask the surface rapidly.

The device for masking surfaces according to the present invention provides several advantages, at least some of them being:
- It enables the masking process to be much faster, as the covered area is larger, this being a key enabler for an industrial environment process.
- The integration of all the elements needed for the whole process into one single device gives the robot much more versatility, while also optimizing the process time.
- The design and size of the device is such that can be either mounted on a gantry, on a robot arm, or on a moveable robotic platform, which can carry the masking head around, which allows complex parts to be suitable for the masking process, this also being a key enabler for an industrial environment.

### Brief description of the drawings

For a better understanding of what has been explained above, some drawings are included in which, schematically and only by way of a non-limiting example, a practical case of embodiment is represented.

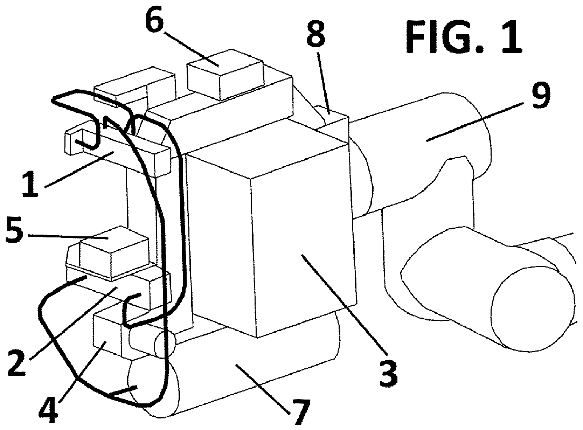

Figure 1 is a perspective view of the device for masking surfaces according to the present invention.

### Description of a preferred embodiment

Figure 1 shows the device for masking surfaces according to the present invention, which is a device capable of depositing masking epoxy resin over a surface, which is prepared to work on different handling devices, i.e., the device can be mounted on a robotic platform, a gantry, a robot arm, or any automated handling system.

According to the embodiment shown, the device for masking surfaces according to the present invention comprises an applicator 1, which applies resin over a given surface. The applicator 1 can be a spray gun that is preferably fed by an air compressor, not shown in the drawing, which allows it to spray the resin, or a nozzle that can be used for limiting the masking area. Therefore, the spray gun can be changed by the nozzle, and vice versa, according to the pretended use.

The device also comprises a resin dispenser 2, which is a cannula containing epoxy resin needed for the masking, that is connected to the applicator 1, and a resin deposit 7, which contains the epoxy resin in liquid format and feeds the resin dispenser 2.

The device also comprises a curing lamp 3, preferably a UV curing lamp, which cure the resin once applied on the surface, said resin reacting with the UV light to complete its polymerization.

For automatically detecting when the curing process has ended, the device also comprises a camera 4, which controls the quality, and as the resin reacts with the UV light and changes its color, detects that the curing process has ended.

The device for curing surfaces according to the present invention, as comprises to distance sensors, a first distance sensor 5 oriented to the application side, that preferably is a laser sensor for controlling the distance to the surface while resin application is taking place, and a second sensor 6, oriented to the curing side, that preferably is a laser sensor for controlling the distance to the surface while the resin curing is taking place.

The device for curing surfaces according to the present invention also comprises a joint 8, e.g., a coupling flange, that fixes or engages the device to a robotic arm 9 of a robotic platform.

It must be pointed out that for simplicity reasons other components of the device are not shown in the drawing, such as solenoid valves that control the resin flow over the different elements through the conduits, and pressure regulators that control the internal circuit pressure to ensure a smooth resin application.

The operation of the device for masking surfaces according to the present invention is the following. Once the device is attached to the robot arm 9, the masking process can start.

The robot arm 9 allows the device to be moved all around the surfaces to be masked, such as metallic tools, composite parts, etc.

The device can first limit the masking area on the surface with the nozzle and later mask the masking area rapidly with the spray gun.

## Claims

1. Device for masking surfaces comprising:
- an applicator (1), that applies a resin on a surface,
**characterized in that** the device also comprises:
- a resin dispenser (2) that dispenses the resin to the applicator (1);
- a resin deposit (7) that provides the resin to the resin dispenser (2); and
- a joint (8) for engaging a robot arm.

2. Device for masking surfaces according to claim 1, wherein the device also comprises a curing lamp (3).

3. Device for masking surfaces according to claim 1 or 2, wherein the device also comprises a camera (4).

4. Device for masking surfaces according to any one of the previous claims, wherein the device also comprises a first distance sensor (5) oriented to an application side of the device.

5. Device for masking surfaces according to any one of the previous claims, wherein the device also comprises a second distance sensor (6) oriented to a curing side of the device.

6. Device for masking surfaces according to claims 1 and 2, wherein the curing lamp (3) is placed in an opposite side of the device with respect to the applicator (1).

7. Device for masking surfaces according to claims 2 or 6, wherein the curing lamp (3) is an UV curing lamp.

8. Device for masking surfaces according to any one of the previous claims, wherein the applicator (1) is a nozzle or a spray gun.
